# EUROPÄISCHE PATENTANMELDUNG

(11) **EP 3 451 573 A1**
(43) Veröffentlichungstag der Anmeldung: **06.03.2019**
(21) Anmeldenummer: 17188577.5
(22) Anmeldetag: 30.08.2017
(51) Int. Cl.: H04L 9/08, H04L 9/14

(54) **VERFAHREN UND SYSTEM ZUM PRÜFEN EINER FUNKTION EINER VERSCHLÜSSELUNGSEINRICHTUNG**

(71) Anmelder: Siemens Aktiengesellschaft, 80333 München (DE)
(72) Erfinder: Aschauer, Hans, 81829 München (DE); Falk, Rainer, 85586 Poing (DE); Fischer, Kai, 85598 Baldham (DE); Fries, Steffen, 85598 Baldham (DE); Heintel, Markus, 81377 München (DE); Klasen, Wolfgang, 85521 Ottobrunn (DE); Pfau, Axel, 80333 München (DE); Zwanzger, Johannes, 85579 Neubiberg (DE)

(57) **Zusammenfassung**

Es wird ein Verfahren zum Prüfen einer Funktion einer Verschlüsselungseinrichtung (1) vorgeschlagen. Die Verschlüsselungseinrichtung (1) ist eingerichtet, Eingangsdaten (E) in Abhängigkeit von Schlüsseldaten (S), die durch eine Sicherheitseinrichtung (2) aus ersten Ursprungsschlüsseldaten (S₁) und/oder aus zweiten Ursprungsschlüsseldaten (S₂), die über eine erste vorbestimmte Funktion (K₁) mit den ersten Ursprungsschlüsseldaten (S1) verknüpft sind, unter Verwendung einer zweiten vorbestimmten Funktion (K₂) erzeugt wurden, anhand einer kryptographischen Verschlüsselungsfunktion (VF) zu verschlüsseln; wobei das Verfahren umfasst:
Verschlüsseln (P1) von Testdaten (T) in der Verschlüsselungseinrichtung (1) mit zu verifizierenden Schlüsseldaten (S') zum Erzeugen von verschlüsselten Testdaten (VT);
Ermitteln (P2) der zu verifizierenden Schlüsseldaten (S'), mit Hilfe derer die verschlüsselten Testdaten (VT) verschlüsselt wurden, unter Verwendung der ursprünglichen Testdaten (T) und der kryptographischen Verschlüsselungsfunktion (VF) ;
Ermitteln (P3) von zu verifizierenden ersten und/oder zweiten Ursprungsschlüsseldaten (S₁', S₂') für die zu verifizierenden Schlüsseldaten (S') unter Verwendung der zweiten vorbestimmten Funktion (K₂);
Bereitstellen (P4) der zu verifizierenden zweiten Ursprungsschlüsseldaten (S₂') oder der zweiten Ursprungsschlüsseldaten (S₂) als Vergleichsschlüsseldaten (V);
Anwenden (P5) der ersten vorbestimmten Funktion (K₁) auf die ersten zu verifizierenden Ursprungsschlüsseldaten (S₁') zum Erzeugen von Überprüfungsschlüsseldaten (U); und
falls die Überprüfungsschlüsseldaten (U) mit den Vergleichsschlüsseldaten (V) übereinstimmen, Bestimmen (P7), dass die zu verifizierenden Schlüsseldaten (S'), mit denen die verschlüsselten Testdaten (VT) verschlüsselt wurden, mit der Sicherheitseinrichtung (2) erzeugt wurden.

Es wird ferner ein System zum Prüfen einer Funktion einer Verschlüsselungseinrichtung vorgeschlagen. Das Verfahren und das System ermöglichen es zu prüfen, dass eine Verschlüsselungseinrichtung tatsächlich die durch die Sicherheitseinrichtung erzeugten Schlüsseldaten zum Verschlüsseln von Eingangsdaten verwendet.

## Beschreibung

Die vorliegende Erfindung betrifft ein Verfahren und ein System zum Prüfen einer Funktion einer Verschlüsselungseinrichtung.

Eine Sicherheitseinrichtung, die kryptographische Operationen durchführt, kann zum sicheren Verarbeiten von zu schützenden Daten eingesetzt werden. Hierzu kann die Sicherheitseinrichtung Schlüsseldaten, zum Beispiel einen Schlüsselstrom, erzeugen und einer Verschlüsselungseinrichtung bereitstellen, die zu schützende Daten dann mit Hilfe der Schlüsseldaten verschlüsseln soll.

In einem Fall, in dem die Verschlüsselungseinrichtung zum Beispiel von einem externen Zulieferer bereitgestellt wird, kann die genaue Funktion der Verschlüsselungseinrichtung einem Benutzer unbekannt sein. Es besteht daher insbesondere ein Bedarf zu prüfen, ob für den kryptographischen Schutz der zu schützenden Daten tatsächlich die durch die Sicherheitseinrichtung erzeugten Schlüsseldaten verwendet werden, oder ob die Verschlüsselungseinrichtung für die Verschlüsselung der zu schützenden Daten ein anderes, insbesondere schwächeres Verschlüsselungsverfahren einsetzt.

Vor diesem Hintergrund besteht eine Aufgabe der vorliegenden Erfindung darin, ein Verfahren und ein System bereitzustellen, mit welchen eine Funktion einer Verschlüsselungseinrichtung geprüft werden kann.

Demgemäß wird ein Verfahren zum Prüfen einer Funktion einer Verschlüsselungseinrichtung vorgeschlagen. Die Verschlüsselungseinrichtung ist eingerichtet, Eingangsdaten in Abhängigkeit von Schlüsseldaten, die durch eine Sicherheitseinrichtung aus ersten Ursprungsschlüsseldaten und/oder aus zweiten Ursprungsschlüsseldaten, die über eine erste vorbestimmte Funktion mit den ersten Ursprungsschlüsseldaten verknüpft sind, unter Verwendung einer zweiten vorbestimmten Funktion erzeugt wurden, zur Ausgabe von Ausgabedaten anhand einer kryptographischen Verschlüsselungsfunktion zu verschlüsseln. Das Verfahren umfasst:
Verschlüsseln von Testdaten als ursprüngliche Testdaten als Eingangsdaten für die Verschlüsselungseinrichtung mit zu verifizierenden Schlüsseldaten zum Erzeugen von verschlüsselten Testdaten;
Ermitteln der zu verifizierenden Schlüsseldaten, mit Hilfe derer die verschlüsselten Testdaten verschlüsselt wurden, unter Verwendung der ursprünglichen Testdaten und der kryptographischen Verschlüsselungsfunktion;
Ermitteln von zu verifizierenden ersten und/oder zweiten Ursprungsschlüsseldaten für die ermittelten zu verifizierenden Schlüsseldaten unter Verwendung der ermittelten zu verifizierenden Schlüsseldaten und der zweiten vorbestimmten Funktion;
Bereitstellen der zu verifizierenden zweiten Ursprungsschlüsseldaten oder der zweiten Ursprungsschlüsseldaten als Vergleichsschlüsseldaten;
Anwenden der ersten vorbestimmten Funktion auf die ersten zu verifizierenden Ursprungsschlüsseldaten zum Erzeugen von Überprüfungsschlüsseldaten;
Vergleichen der Überprüfungsschlüsseldaten mit den Vergleichsschlüsseldaten; und
falls die Überprüfungsschlüsseldaten mit den Vergleichsschlüsseldaten übereinstimmen, Bestimmen, dass die zu verifizierenden Schlüsseldaten, mit denen die verschlüsselten Testdaten verschlüsselt wurden, mit der Sicherheitseinrichtung erzeugt wurden.

Die Sicherheitseinrichtung ist insbesondere eine Hardwarekomponente, die zum Erzeugen von Schlüsseldaten geeignet ist, und eingesetzt wird, um kryptographische Operationen durchzuführen. Die Sicherheitseinrichtung kann zum Beispiel eine Chipkarte oder eine SIM-Karte für eine Mobilfunkauthentisierung oder für einen Personalausweis oder ein Hardware-Sicherheitsmodul sein. Die Sicherheitseinrichtung kann z.B. auch für den kryptographischen Schutz einer Car-2-X-Kommunikation und/oder eines Pay-TV-Empfängers eingesetzt werden. Die Sicherheitseinrichtung kann eine für den Benutzer der Sicherheitseinrichtung vertrauenswürdige Einrichtung sein, sodass es erwünscht ist, zu sichernde Daten bzw. im Folgenden beschriebene Eingangsdaten tatsächlich mit den durch die Sicherheitseinrichtung erzeugten Schlüsseldaten zu verschlüsseln.

Zum Erzeugen der Schlüsseldaten verwendet die Sicherheitseinrichtung zumindest die erste und zweite vorbestimmte Funktion. Die Sicherheitseinrichtung erzeugt insbesondere erste Ursprungsschlüsseldaten, zum Beispiel mit einem ersten geheimen Schlüssel. Die Sicherheitseinrichtung kann die zweiten Ursprungsschlüsseldaten durch Anwenden der ersten vorbestimmten Funktion auf die ersten Ursprungsschlüsseldaten erhalten.

In Ausführungsformen werden die ersten und zweiten Ursprungsschlüsseldaten unter Verwendung der zweiten vorbestimmten Funktion verknüpft, sodass die Schlüsseldaten erhalten werden.

Die Schlüsseldaten können auch mit Hilfe der zweiten vorbestimmten Funktion direkt aus den ersten oder zweiten Ursprungsschlüsseldaten abgeleitet werden. Die zweite vorbestimmte Funktion kann die ersten oder zweiten Ursprungsschlüsseldaten hierbei unverändert lassen, sodass die Schlüsseldaten den ersten oder zweiten Ursprungsschlüsseldaten entsprechen.

Die Verschlüsselungseinrichtung ist insbesondere eine Einrichtung, die eine für den Benutzer zumindest teilweise unbekannte bzw. nicht nachvollziehbare Realisierung und/oder Implementierung hat, und ist somit eine nicht vertrauenswürdige Einrichtung. Das zuvor und im Folgenden beschriebene Verfahren dient insbesondere dazu auszuschließen, dass die nicht vertrauenswürdige Implementierung eine unbekannte Funktion ausführt. Das Verfahren dient somit dazu, die Funktion der Verschlüsselungseinrichtung zu verifizieren, und insbesondere zu prüfen, ob die Verschlüsselungseinrichtung die Eingangsdaten tatsächlich mit den durch die Sicherheitseinrichtung erzeugten Schlüsseldaten verschlüsselt.

Die Eingangsdaten, auch Klartextdaten, können zu schützende Daten bzw. zu übertragende Daten und/oder Testdaten sein. Sie können aus einer Bit-Folge bestehen. Testdaten sind insbesondere Daten, die dem Benutzer bekannt sind und zum Prüfen der Funktion der Verschlüsselungseinrichtung eingesetzt werden. Die zu schützenden Daten hingegen sind insbesondere Daten, die dem Benutzer unbekannt sind. Ferner können die zu schützenden Daten dem Benutzer bekannt sein und einem Dritten nicht bekannt werden. In Ausführungsformen ist der Verschlüsselungseinrichtung nicht bewusst, dass sie Testdaten und keine zu schützende Daten verschlüsselt. Insbesondere kann die Verschlüsselungseinrichtung nicht zwischen Testdaten und zu verschlüsselnden Daten unterscheiden.

Die Testdaten werden von der Verschlüsselungseinrichtung mit zu verifizierenden Schlüsseldaten verschlüsselt, sodass verschlüsselte Testdaten erzeugt werden. Die zu verifizierenden Schlüsseldaten sind hierbei Schlüsseldaten, die dem Benutzer unbekannt sind. Insbesondere ist unbekannt, ob die zu verifizierenden Schlüsseldaten die durch die Sicherheitseinrichtung erzeugten Schlüsseldaten sind, oder ob sie gefälschte bzw. durch die Verschlüsselungseinrichtung erzeugte Schlüsseldaten sind. Die Herkunft der zu verifizierenden Schlüsseldaten kann mit Hilfe des Verfahrens, insbesondere unter Verwendung einer im Folgenden näher beschriebenen Überprüfungseinrichtung, überprüft werden.

Weil die Testdaten bekannte Daten sind, kann aus den verschlüsselten Testdaten eine Information über die zu verifizierenden Schlüsseldaten gewonnen werden. Mit Kenntnis der verschlüsselten Testdaten, der (ursprünglichen) Testdaten und der von der Verschlüsselungseinrichtung zum Verschlüsseln der Testdaten verwendeten Verschlüsselungsfunktion können die zu verifizierenden Schlüsseldaten ermittelt werden bzw. zurückgewonnen werden. Hierzu wird insbesondere die Überprüfungseinrichtung verwendet.

Falls die zu verifizierende Schlüsseldaten durch die Sicherheitseinrichtung erzeugte Schlüsseldaten sind, sind die zu verifizierenden Schlüsseldaten insbesondere aus ersten und/oder zweiten Ursprungsschlüsseldaten mit Hilfe der zweiten vorbestimmten Funktion erzeugt worden, wobei die ersten und zweiten Ursprungsschlüsseldaten über die erste vorbestimmte Funktion miteinander verknüpft sind.

Aus den zu verifizierenden Schlüsseldaten können mit der zweiten Funktion, die dem Benutzer insbesondere bekannt ist, zu verifizierende erste und/oder zweite Ursprungsschlüsseldaten ermittelt werden, z.B. durch die Überprüfungseinrichtung.

Anschließend kann eine Verknüpfung der zu verifizierenden Ursprungsschlüsseldaten miteinander oder mit den Ursprungsschlüsseldaten überprüft werden. Hierzu werden Überprüfungsschlüsseldaten durch Anwenden der ersten vorbestimmten Funktion auf die zu verifizierenden ersten Ursprungsschlüsseldaten erzeugt.

Für den Fall, dass die ersten und zweiten Ursprungsschlüsseldaten ermittelt wurden, kann überprüft werden, ob diese über die erste vorbestimmte Funktion miteinander verknüpft sind. Hierzu werden die zu verifizierenden zweiten Ursprungsschlüsseldaten als Vergleichsschlüsseldaten mit den Überprüfungsschlüsseldaten verglichen. Falls bestimmt wird, dass die Vergleichsschlüsseldaten dieselben wie die Überprüfungsschlüsseldaten sind, wird bestimmt, dass die zu verifizierenden ersten Ursprungsschlüsseldaten über die erste vorbestimmte Funktion mit den zu verifizierenden zweiten Ursprungsschlüsseldaten verknüpft sind. Ist dieses der Fall, kann insbesondere bestimmt werden, dass die zu verifizierenden Schlüsseldaten durch die Sicherheitseinrichtung erzeugt wurden. Insbesondere wird bestimmt, dass die Verschlüsselungseinrichtung zur Verschlüsselung der Testdaten die Schlüsseldaten der Sicherheitseinrichtung verwendet hat, und dass eine Funktion der Verschlüsselungseinrichtung zuverlässig ist.

Falls nur die zu verifizierenden ersten Ursprungsschlüsseldaten ermittelt werden, wird insbesondere überprüft, ob diese über die erste vorbestimmte Funktion mit den zweiten Ursprungsschlüsseldaten aus der Sicherheitseinrichtung verknüpft sind. Hierzu werden die zweiten Ursprungsschlüsseldaten als Vergleichsschlüsseldaten mit den Überprüfungsschlüsseldaten verglichen. Falls diese übereinstimmen, kann insbesondere bestimmt werden, dass die zu verifizierenden Schlüsseldaten durch die Sicherheitseinrichtung erzeugt wurden. Insbesondere wird bestimmt, dass die Verschlüsselungseinrichtung zur Verschlüsselung der Testdaten die Schlüsseldaten der Sicherheitseinrichtung verwendet hat, und dass eine Funktion der Verschlüsselungseinrichtung zuverlässig ist.

Falls die zu verifizierenden ersten und zweiten Ursprungsschlüsseldaten nicht über die erste vorbestimmte Funktion miteinander verknüpft sind oder falls die zu verifizierenden ersten Ursprungsschlüsseldaten nicht über die erste vorbestimmte Funktion mit den zweiten Ursprungsschlüsseldaten verknüpft sind, wird insbesondere bestimmt, dass die zu verifizierenden Schlüsseldaten nicht durch die Sicherheitseinrichtung erzeugt wurden. Insbesondere wird bestimmt, dass die Verschlüsselungseinrichtung zur Verschlüsselung der Testdaten nicht die Schlüsseldaten der Sicherheitseinrichtung verwendet hat, und dass eine Funktion der Verschlüsselungseinrichtung nicht zuverlässig ist. In Ausführungsformen wird eine Fehlermeldung oder ein Alarmsignal ausgegeben, falls erkannt wird, dass die zu verifizierenden Schlüsseldaten nicht durch die Sicherheitseinrichtung erzeugt wurden.

Das beschriebene Verfahren ermöglicht somit eine Prüfung, ob die von der Sicherheitseinrichtung erzeugten Schlüsseldaten beim Verschlüsseln von zu schützenden Daten oder Eingangsdaten mit der Verschlüsselungseinrichtung tatsächlich verwendet wurden. Die Prüfung kann stichprobenartig oder permanent erfolgen. Durch die Prüfung wird verhindert, dass die zu schützende Daten durch eine Ausführungsumgebung, in der die Sicherheitseinrichtung eingebracht wird, negativ beeinflusst werden. Es kann ferner verhindert werden, dass eine Sicherheitsfunktion der Sicherheitseinrichtung durch die Verschlüsselungseinrichtung komplett umgangen wird, und dass ein anderer, insbesondere schwächerer, Schlüssel oder ein anderes Verfahren eingesetzt wird. Die Funktion der nicht vertrauenswürdigen Verschlüsselungseinrichtung kann überprüft werden, sodass die Verschlüsselungseinrichtung ggf. ohne Bedenken zum Verschlüsseln von zu schützenden Daten eingesetzt werden kann oder durch eine zuverlässige Verschlüsselungseinrichtung ersetzt werden kann. Insgesamt erhöht das beschriebene Verfahren die Sicherheit des Gesamtsystems.

Gemäß einer Ausführungsform sind die Schlüsseldaten, die ersten Ursprungsschlüsseldaten, die zweiten Ursprungsschlüsseldaten, die zu verifizierenden Schlüsseldaten, die zu verifizierenden ersten Ursprungsschlüsseldaten, die zu verifizierenden zweiten Ursprungsschlüsseldaten, die Überprüfungsschlüsseldaten und/oder die Vergleichsschlüsseldaten ein Schlüsselstrom.

Der Schlüsselstrom kann aus einer Bit-Folge bestehen. Insbesondere sind die ersten Ursprungsschlüsseldaten eine pseudozufällige Zeichenfolge, die aus dem zuvor beschriebenen geheimen Schlüssel abgeleitet wird.

Gemäß einer weiteren Ausführungsform umfasst das Verfahren ferner ein dynamisches Bestimmen der Testdaten. Insbesondere sind die Testdaten nicht vorkonfiguriert sondern werden dynamisch bestimmt. Dadurch kann verhindert werden, dass die Verschlüsselungseinrichtung erkennt, dass sie Testdaten als Eingangsdaten erhält.

Gemäß einer weiteren Ausführungsform liegen die Testdaten verstreut in unbekannten zu schützenden Daten bzw. in Eingangsdaten vor.

Zum Beispiel liegen die Testdaten in Blöcke verteilt in "normalen", zu schützenden Daten vor. Es können beispielsweise 10% der gesamten Eingangsdaten der Verschlüsselungseinrichtung Testdaten sein, und die restlichen 90% können zu schützende Daten sein. Beim Vergleichen der Überprüfungsschlüsseldaten mit den Vergleichsschlüsseldaten sollten dann 10% ± δ der Überprüfungsschlüsseldaten mit den Vergleichsschlüsseldaten übereinstimmen, wobei δ eine vordefinierte Schranke ist, damit bestimmt werden kann, dass die zu verifizierenden Schlüsseldaten tatsächlich durch die Sicherheitseinrichtung erzeugt wurden. Die vorbestimmte Schranke δ dient insbesondere dazu, eine Rate von Fehlalarmen, z.B. wenn Pakete auf dem Netz verloren gehen, zu steuern.

Gemäß einer weiteren Ausführungsform ist die kryptographische Verschlüsselungsfunktion eine XOR-Funktion. In diesem Fall können die zu verifizierenden Schlüsseldaten, mit Hilfe derer die verschlüsselten Testdaten verschlüsselt wurden, unter Anwenden einer weiteren XOR-Funktion auf die verschlüsselten Testdaten und die ursprünglichen Testdaten auf besonders einfache Weise ermittelt werden.

Gemäß einer weiteren Ausführungsform ist die erste vorbestimmte Funktion eine Schlüsselableitfunktion und/oder ein asymmetrisches Signaturverfahren.

Als Schlüsselableitfunktion, auch "key derivation function", kann eine HKDF ("HMAC based key derivation function") oder eine PBKDF2 ("Password-Based Key Derivation Function 2") Funktion verwendet werden.

Das asymmetrische Signaturverfahren kann ein ECDSA-Verfahren ("Elliptic Curve Digital Signature Algorithm") sein. Die Signatur kann mit Hilfe eines in der Sicherheitseinrichtung enthaltenen privaten Schlüssels erzeugt werden. Die digitale Signatur kann, zum Beispiel durch die Überprüfungseinrichtung, mit einem zu dem privaten Schlüssel gehörenden öffentlichen Schlüssel verifiziert werden.

Gemäß einer weiteren Ausführungsform umfasst das Verfahren ferner:
Erzeugen der ersten vorbestimmten Funktion in der Sicherheitseinrichtung;
Erzeugen einer neuen ersten vorbestimmten Funktion in der Sicherheitseinrichtung nach Ablauf einer vorbestimmten Zeit seit dem Erzeugen der ersten vorbestimmten Funktion; und
Ersetzten der ersten vorbestimmten Funktion durch die neue erste vorbestimmte Funktion.

Die erste vorbestimmte Funktion wird insbesondere nicht als statische Funktion genutzt, sondern über die Lebenszeit der Sicherheitseinrichtung gewechselt, zum Beispiel periodisch gewechselt. Zum periodischen Wechseln der ersten vorbestimmten Funktion K₁ kann diese über eine Hashkette H gebildet sein, z.B. sodass [K₁]ᵢ=H([K₁]ᵢ₋₁), wobei in dem Sicherheitseinrichtung ein Startwert [K₁]₀ hinterlegt sein kann. Mittels [K₁]₀ kann eine Hashkette mit n Elementen erzeugt werden, wobei n die vordefinierte Länge der verwendeten Hashkette ist (z.B. n = 365). Das letzte Element, [K₁]ₙ, wird signiert als signierter Ankerwert der Hashkette veröffentlicht bzw. der Überprüfungseinrichtung übergeben. In einer ersten Periode werden die zweiten Ursprungsschlüsseldaten mit [K₁]ₙ₋₁ berechnet, und die Überprüfungseinrichtung sammelt Pakete mit verschlüsselten Testdaten. Nach einer bestimmten Periode, z.B. 1 Tag, wird von [K₁]ₙ₋₁ auf [K₁]ₙ₋₂ gewechselt und [K₁]ₙ₋₁ von der Sicherheitseinrichtung öffentlich gemacht. Mittels einer Hashoperation auf den Schlüssel[K₁]ₙ₋₁ kann z.B. die Überprüfungseinrichtung einen zu prüfenden Ankerwert ermitteln. Stimmt der zu prüfende Ankerwert mit dem signierten Ankerwert überein, können die Pakete verifiziert werden.

Vorteilhaft muss kein geheimer Schlüssel als die erste vorbestimmte Funktion bekannt gegeben werden, sondern nur der signierte Ankerwert.

Gemäß einer weiteren Ausführungsform ist die zweite vorbestimmte Funktion eine Konkatenationsfunktion. Mit der Konkatenationsfunktion können die ersten und zweiten Ursprungsschlüsseldaten miteinander verknüpft werden.

Gemäß einer weiteren Ausführungsform umfasst das Verfahren ferner:
Schützen der Testdaten unter Verwendung eines Authentisierungsverfahrens; und
Überprüfen der korrekten Ausführung des Authentisierungsverfahrens unter Verwendung von den ursprünglichen Testdaten und der ermittelten zu verifizierenden Schlüsseldaten.

Das Authentisierungsverfahren kann mit einer GHASH-Funktion in GCM ("Galois/Counter Mode") erfolgen. Das Authentisierungsverfahren erfolgt insbesondere neben der XOR-Verschlüsselung der Eingangsdaten durch die Verschlüsselungseinrichtung.

Gemäß einer weiteren Ausführungsform wird ein System zum Prüfen einer Funktion einer Verschlüsselungseinrichtung unter Verwendung einer Überprüfungseinrichtung vorgeschlagen. Die Verschlüsselungseinrichtung ist eingerichtet, Eingangsdaten in Abhängigkeit von Schlüsseldaten, die durch eine Sicherheitseinrichtung erzeugt wurden, zur Ausgabe von Ausgabedaten anhand einer kryptographischen Verschlüsselungsfunktion zu verschlüsseln; wobei das System umfasst:
die Sicherheitseinrichtung mit einer Erzeugungseinrichtung zum Erzeugen der Schlüsseldaten aus ersten Ursprungsschlüsseldaten und/oder aus zweiten Ursprungsschlüsseldaten, die über eine erste vorbestimmte Funktion mit den ersten Ursprungsschlüsseldaten verknüpft sind, unter Verwendung einer zweiten vorbestimmten Funktion; und
die Überprüfungseinrichtung, welche umfasst:
   eine Empfangseinrichtung zum Empfangen von verschlüsselten Testdaten, die aus ursprünglichen Testdaten als Eingangsdaten mit zu verifizierenden Schlüsseldaten durch die Verschlüsselungseinrichtung verschlüsselt wurden;
   eine Ermittlungseinrichtung zum Ermitteln der zu verifizierenden Schlüsseldaten, mit Hilfe derer die verschlüsselten Testdaten verschlüsselt wurden, unter Verwendung der ursprünglichen Testdaten und der kryptographischen Verschlüsselungsfunktion, und zum Ermitteln von zu verifizierenden ersten und/oder zweiten Ursprungsschlüsseldaten für die ermittelten zu verifizierenden Schlüsseldaten unter Verwendung der ermittelten zu verifizierenden Schlüsseldaten und der zweiten vor-bestimmten Funktion;
   eine Bereitstelleinrichtung zum Bereitstellen der zu verifizierenden zweiten Ursprungsschlüsseldaten oder der zweiten Ursprungsschlüsseldaten als Vergleichsschlüsseldaten;
   eine Berechnungseinrichtung zum Anwenden der ersten vorbestimmten Funktion auf die ersten zu verifizierenden Ursprungsschlüsseldaten zum Erzeugen von Überprüfungsschlüsseldaten;
   eine Vergleichseinrichtung zum Vergleichen der Überprüfungsschlüsseldaten mit den Vergleichsschlüsseldaten; und
   eine Bestimmungseinrichtung zum Bestimmen, dass die zu verifizierenden Schlüsseldaten, mit denen die verschlüsselten Testdaten verschlüsselt wurden, mit der Sicherheitseinrichtung erzeugt wurden, falls die Überprüfungsschlüsseldaten mit den Vergleichsschlüsseldaten übereinstimmen.

Gemäß einer weiteren Ausführungsform ist das System geeignet, das zuvor und im Folgenden beschriebene Verfahren durchzuführen.

Die für das vorgeschlagene Verfahren beschriebenen Ausführungsformen und Merkmale gelten für das vorgeschlagene System entsprechend.

Weitere mögliche Implementierungen des Verfahrens und des Systems umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform des Verfahrens und des Systems hinzufügen.

Weitere vorteilhafte Ausgestaltungen und Aspekte der Erfindung sind Gegenstand der Unteransprüche sowie der im Folgenden beschriebenen Ausführungsbeispiele des Verfahrens und des Systems. Im Weiteren werden das Verfahren und das System anhand von bevorzugten Ausführungsformen unter Bezugnahme auf die beigelegten Figuren näher erläutert.
- Fig.: 1 zeigt ein System zum Prüfen der Funktion einer Verschlüsselungseinrichtung gemäß einer ersten Ausführungsform;
- Fig. 2: zeigt eine ausführungsgemäße Überprüfungseinrichtung;
- Fig. 3: zeigt ein ausführungsgemäßes Verfahren zum Prüfen der Funktion einer Verschlüsselungseinrichtung;
- Fig. 4: zeigt ein System zum Prüfen der Funktion einer Verschlüsselungseinrichtung gemäß einer zweiten Ausführungsform;
- Fig. 5: zeigt ein System zum Prüfen der Funktion der Verschlüsselungseinrichtung gemäß einer dritten Ausführungsform; und
- Fig. 6: zeigt eine Verknüpfung zwischen Eingangsdaten, Ausgangsdaten und zu verifizierenden Schlüsseldaten.

In den Figuren sind gleiche oder funktionsgleiche Elemente mit denselben Bezugszeichen versehen worden, sofern nichts anderes angegeben ist.

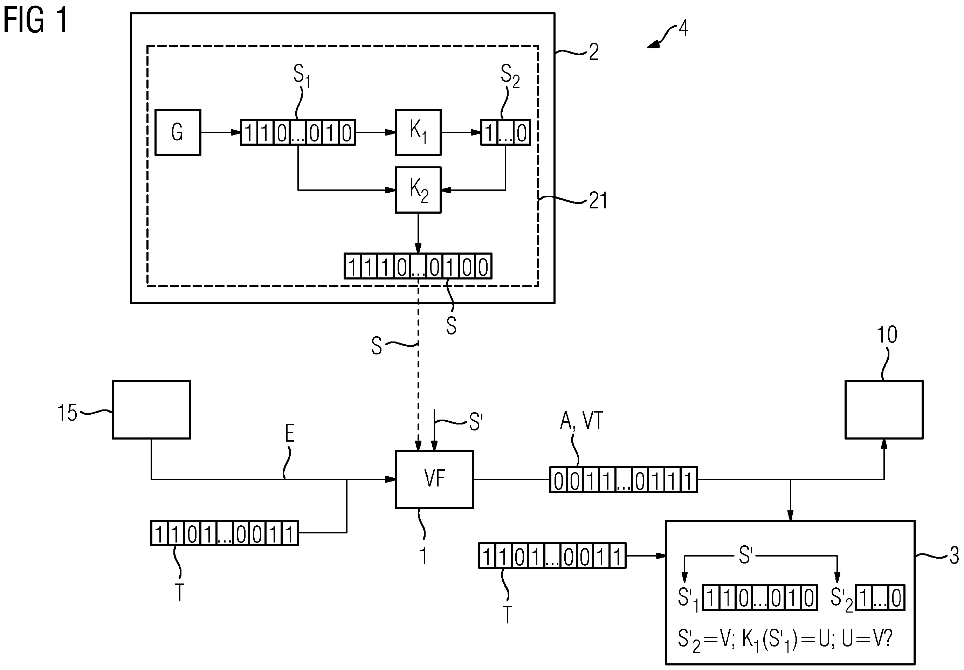

Die Fig. 1 zeigt ein System 4 zum Prüfen der Funktion einer Verschlüsselungseinrichtung 1 gemäß einer ersten Ausführungsform. Das System 4 umfasst eine Sicherheitseinrichtung 2 und eine Überprüfungseinrichtung 3, welche beide vertrauenswürdige Einrichtungen sind. Das heißt insbesondere, dass ein Nutzer des Systems 4 die Funktionen der Sicherheitseinrichtung 2 und der Überprüfungseinrichtung 3 kennt. Die Realisierung und/oder Implementierung der Verschlüsselungseinrichtung 1 ist hierbei unbekannt, weil der Nutzer sich nicht sicher ist, ob die Verschlüsselungseinrichtung 1 tatsächlich die Sicherheitsfunktion der Sicherheitseinrichtung 2 nutzt. Deswegen ist die Verschlüsselungseinrichtung 1 nicht vertrauenswürdig.

Die Sicherheitseinrichtung 1 ist eine Chipkarte mit einer Erzeugungseinrichtung 21 zum Erzeugen von Schlüsseldaten S. Die Schlüsseldaten S sind ein Schlüsselstrom. Zum Erzeugen der Schlüsseldaten S wird zunächst aus einem geheimen Schlüssel G, der in der Sicherheitseinrichtung 1 gespeichert ist, ein Schlüsselstrom S₁ als erste Ursprungsschlüsseldaten erzeugt. Die ersten Ursprungsschlüsseldaten S₁ sind hierbei pseudozufällige Bits, die aus dem geheimen Schlüssel G erzeugt wurden.

Aus den ersten Ursprungsschlüsseldaten S₁ leitet die Sicherheitseinrichtung 1 unter Verwendung einer ersten vorbestimmten Funktion K₁ zweite Ursprungsschlüsseldaten S₂ ab. Die erste vorbestimmte Funktion K₁ ist hierzu in der Sicherheitseinrichtung 1 gespeichert und ist eine HKDF-Schlüsselableitfunktion.

Die ersten und zweiten Ursprungsschlüsseldaten S₁ und S₂ werden mit Hilfe einer zweiten vorbestimmten Funktion K₂ miteinander verknüpft, wodurch die Schlüsseldaten S erhalten werden. Die zweite vorbestimmte Funktion K₂ ist eine Konkatenationsfunktion, die die ersten und zweiten Ursprungsschlüsseldaten S₁ und S₂ zusammenfügt. Die erzeugten Schlüsseldaten S werden der Verschlüsselungseinrichtung 1 zur Verfügung gestellt.

Die Schlüsseldaten S sind zur Verschlüsselung von zu schützenden Daten, die durch ein Feldgerät 15 erfasst werden und verschlüsselt an eine Überwachungseinrichtung 10 übertragen werden, vorgesehen. Die zu schützende Daten werden hierzu als Eingangsdaten E durch die Verschlüsselungseinrichtung 1 verschlüsselt und als Ausgangsdaten A an die Überwachungseinrichtung 10 übertragen. Die Verschlüsselungseinrichtung 1 verschlüsselt die Eingangsdaten E mit Hilfe einer kryptographischen Verschlüsselungsfunktion VF, welche eine XOR-Funktion ist. Hierzu wird die XOR-Funktion auf die Eingangsdaten E und die Schlüsseldaten angewandt, um die Ausgangsdaten A zu erzeugen.

Die Verschlüsselungseinrichtung 1 kennt die erste vorbestimmte Funktion K₁ hierbei nicht. Der Benutzer weiß nicht, ob die Verschlüsselungseinrichtung 1 tatsächlich die Eingangsdaten E anhand der mit der Sicherheitseinrichtung 2 erzeugten Schlüsseldaten S verschlüsselt, oder ob zur Verschlüsselung andere Schlüsseldaten verwendet werden. Die Verschlüsselungseinrichtung 1 verschlüsselt die Eingangsdaten E mit zu verifizierenden Schlüsseldaten S`, wobei unbekannt ist, ob die zu verifizierenden Schlüsseldaten S` den mit der Sicherheitseinrichtung 2 erzeugten Schlüsseldaten S entsprechen, oder andere sind.

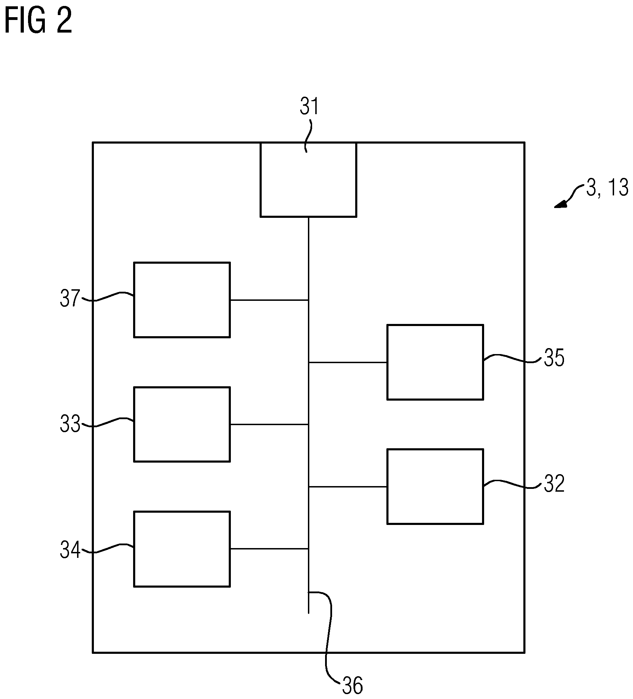

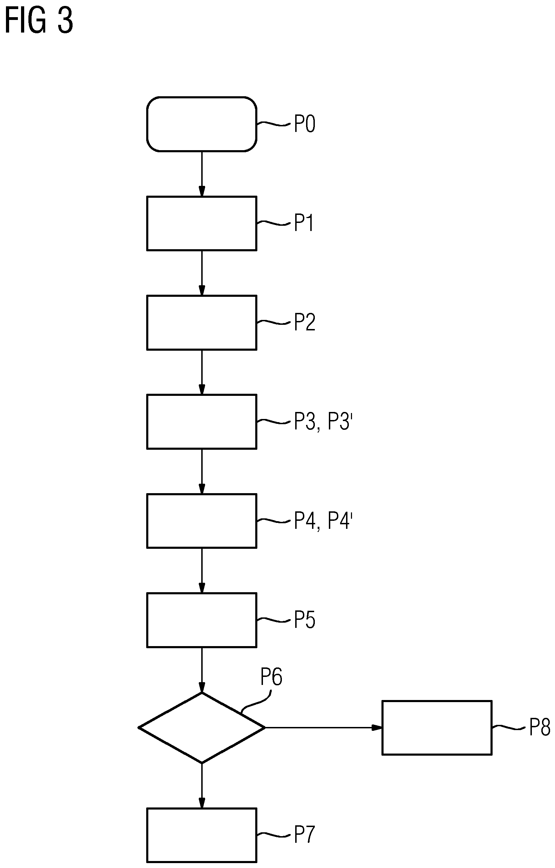

Zum Prüfen der Funktion der Verschlüsselungseinrichtung 1 kann das System 4 das in der Fig. 3 dargestellt Verfahren durchführen. Eine besonders wichtige Rolle spielt hierzu die Überprüfungseinrichtung 3, welche in der Fig. 2 dargestellt ist. Die Überprüfungseinrichtung 3 umfasst eine Empfangseinrichtung 31, eine Ermittlungseinrichtung 32, eine Bereitstelleinrichtung 33, eine Berechnungseinrichtung 34, eine Bestimmungseinrichtung 37 und eine Vergleichseinrichtung 35, welche über einen internen Bus 36 miteinander verbunden sind.

Das Prüfen der der Verschlüsselungseinrichtung 1 wird im Folgenden anhand der Fig. 1 bis 3 beschrieben.

In einem Schritt P0 werden der Verschlüsselungseinrichtung 1 Testdaten T bereitgestellt. Die Testdaten T sind Daten, die dasselbe Format wie die Eingangsdaten E haben, sodass die Verschlüsselungseinrichtung 1 die Testdaten T nicht als solche erkennen kann.

Die Testdaten T werden in einem Schritt P1 durch die Verschlüsselungseinrichtung 1 mit den zu verifizierenden Schlüsseldaten S' verschlüsselt. Die Testdaten T sind hierbei in die Eingangsdaten E eingestreut, sodass 10% der Eingangsdaten Testdaten T sind, und die restlichen 90% zu schützende Daten von dem Feldgerät 15 sind. Die verschlüsselten Ausgangsdaten A erhalten auch 10% verschlüsselten Testdaten VT und 90% verschlüsselte Daten von dem Feldgerät 15.

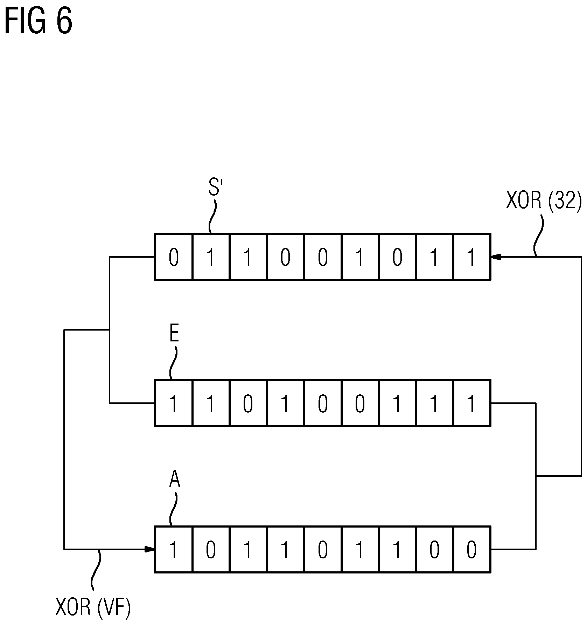

Die Verschlüsselung der Eingangsdaten E mit den zu prüfenden Schlüsseldaten S' ist in der Fig. 6 dargestellt. Die Ausgangsdaten A werden durch die XOR-Funktion als Verschlüsselungsfunktion VF erhalten.

Die Ausgangsdaten A werden, inklusive verschlüsselte Testdaten VT, an die Überprüfungseinrichtung 3 übertragen. Die Überprüfungseinrichtung 3 empfängt die Ausgangsdaten A über die in der Fig. 2 dargestellten Empfangseinrichtung 31, welche eine Schnittstelle der Überprüfungseinrichtung 3 ist.

In einem Schritt P2 Ermittelt die Überprüfungseinrichtung 3 die zu verifizierende Schlüsseldaten S`. Die Ermittlung wird durch die Ermittlungseinrichtung 32 der Überprüfungseinrichtung 3 durchgeführt. Zur Ermittlung der zu verifizierenden Schlüsseldaten S` verwendet die Ermittlungseinrichtung 32 die ursprünglichen Testdaten T, die die Überprüfungseinrichtung 3 separat von den Ausgangsdaten A erhalten hat. Ferner benutzt die Ermittlungseinrichtung 32 die empfangenen verschlüsselten Testdaten VT und die Verschlüsselungsfunktion VF, die der Überprüfungseinrichtung 3 beide bekannt sind.

Zur Ermittlung der zu verifizierenden Schlüsseldaten S' wendet die Ermittlungseinrichtung 32 eine weitere XOR-Funktion auf die Eingangs- und Ausgangdaten E, A an, wie auf der rechten Seite der Fig. 6 dargestellt.

In einem Schritt P3 werden zu verifizierende erste und zweite Ursprungsschlüsseldaten S₁' und S₂' durch die Ermittlungseinrichtung 32 ermittelt. Hierzu verwendet die Ermittlungseinrichtung 32 eine zur zweiten vorbestimmten Funktion K₂ inversen Funktion.

In einem Schritt P4 werden die zweite Ursprungsschlüsseldaten S₂' als Vergleichsschlüsseldaten V bereitgestellt. Dieses erfolgt mit Hilfe der Bereitstelleinrichtung 33.

In einem Schritt P5 wird die erste vorbestimmte Funktion K₁ auf die ersten Ursprungsschlüsseldaten S₁' angewandt, wodurch Überprüfungsschlüsseldaten U erzeugt werden. Die Überprüfungsschlüsseldaten U sind somit dadurch definiert, dass U = K₁(S₁').

In einem Schritt P6 werden die Überprüfungsschlüsseldaten U mit den Vergleichsschlüsseldaten V verglichen. Es wird also überprüft, ob U = V, also ob K₁(S₁') = S₂'. Falls die Überprüfungsschlüsseldaten U und die Vergleichsschlüsseldaten V für 10% der Daten gleich sind (wobei die 10% dem Anteil an Testaten entsprechen), wird in einem Schritt P7 durch die Bestimmungseinrichtung 37 bestimmt, dass die zu verifizierenden Schlüsseldaten S` mit der Sicherheitseinrichtung 2 erzeugt wurden. In einer Variante wird statt dem festen Anteil von 10% ein Toleranzfenster verwendet, z.B. 8..10% oder 9..10% oder 9..11%, um z.B. Paketverluste oder Übertragungsfehler zu berücksichtigen.

Im Schritt P7 wird ferner bestimmt, dass die Verschlüsselungseinrichtung 1 zur Verschlüsselung der Testdaten T die Schlüsseldaten S der Sicherheitseinrichtung 2 verwendet hat, und dass eine Funktion der Verschlüsselungseinrichtung 1 zuverlässig ist.

Falls in dem Schritt S6 keine Übereinstimmung zwischen den Überprüfungsschlüsseldaten U und den Vergleichsschlüsseldaten V von 10% entdeckt wird, wird in einem Schritt P8 bestimmt, dass die zu verifizierenden Schlüsseldaten S' nicht durch die Sicherheitseinrichtung 2 erzeugt wurden. Es wird ferner bestimmt, dass die Verschlüsselungseinrichtung 1 zur Verschlüsselung der Testdaten T nicht die Schlüsseldaten S der Sicherheitseinrichtung verwendet hat, und dass eine Funktion der Verschlüsselungseinrichtung 1 nicht zuverlässig ist. In dem Schritt P8 wird eine Fehlermeldung durch die Überprüfungseinrichtung in Form eines Alarms ausgegeben, wodurch ein Benutzer erkennen kann, dass die Verschlüsselungseinrichtung 1 nicht zuverlässig ist.

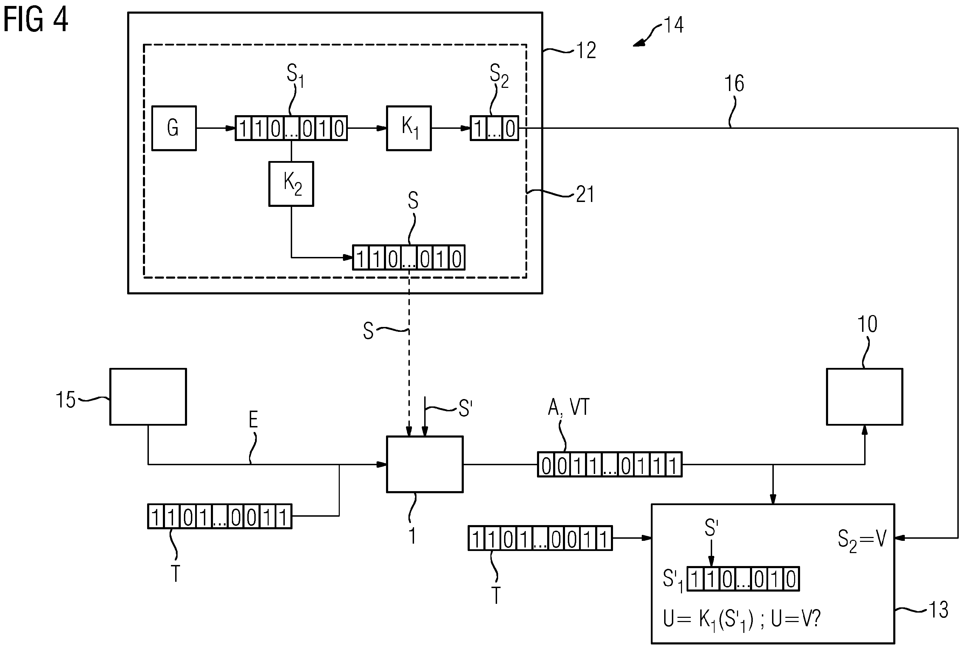

Die Fig. 4 zeigt ein System 14 zum Prüfen der Funktion einer Verschlüsselungseinrichtung 1 gemäß einer zweiten Ausführungsform. Das System 14 gemäß der zweiten Ausführungsform umfasst eine Sicherheitseinrichtung 12 und eine Überprüfungseinrichtung 13.

Das System 14 gemäß der zweiten Ausführungsform unterscheidet sich von dem System 4 gemäß der ersten Ausführungsform dadurch, dass die Schlüsseldaten S nur unter Berücksichtigung der ersten Ursprungsschlüsseldaten S₁ in der Sicherheitseinrichtung 12 erzeugt werden, also ohne die zweiten Ursprungsschlüsseldaten S₂ zu berücksichtigen. Die Überprüfungseinrichtung 13 wird dementsprechend angepasst, um auch in dem System 14 gemäß der zweiten Ausführungsform die Funktion der Verschlüsselungseinrichtung 1 prüfen zu können.

In der Sicherheitseinrichtung 12 werden die ersten und zweiten Ursprungsschlüsseldaten S₁ und S₂ wie in der oberhalb beschriebenen Sicherheitseinrichtung 2 mit dem geheimen Schlüssel G und der ersten vorbestimmten Funktion K₁ erzeugt. Die Schlüsseldaten werden allerdings nun nur unter Berücksichtigung der ersten Ursprungsschlüsseldaten S₁ erzeugt. Die zweite vorbestimmte Funktion K₂ verändert die ersten Ursprungsschlüsseldaten S₁ nicht, sodass S = S₁ gilt.

Das System 14 gemäß der zweiten Ausführungsform kann auch zum Prüfen der Funktion der Verschlüsselungseinrichtung 1 eingesetzt werden. Hierzu werden die Verfahrensschritte P0 bis P2, P3`, P4' und P5 bis P8 aus der Fig. 3 mit dem System 14 durchgeführt. Die Schritte P0 bis P2 und P5 bis P8 wurden bereits beschrieben. Die Schritte P3` und P4`, welche die zuvor beschriebenen Schritte P3 und P4 ersetzten, werden im Folgenden beschrieben.

In dem Schritt P3' werden nur zu verifizierende erste Ursprungsschlüsseldaten S₁' ermittelt. Es werden also keine zu verifizierenden zweiten Ursprungsschlüsseldaten S₂' ermittelt. Hierzu wird die in der Fig. 2 dargestellte Ermittlungseinrichtung 32 verwendet.

In dem Schritt P4' werden die zweiten Ursprungsschlüsseldaten S₂ der Sicherheitseinrichtung 2 als Vergleichsschlüsseldaten V an die Überprüfungseinrichtung 3 bereitgestellt. Diese werden über das in der Fig. 4 dargestellte Kabel 16 an die Überprüfungseinrichtung 3 übertragen und durch die Empfangseinrichtung 31 empfangen.

Die Schritte P5 bis P8 werden wie bereits beschrieben durchgeführt, wodurch bestimmt werden kann, ob die Verschlüsselungseinrichtung 1 die Eingangsdaten E tatsächlich mit den durch die Sicherheitseinrichtung 2 erzeugten Schlüsseldaten S verschlüsselt wurden. Es wird somit bestimmt, ob die Verschlüsselungseinrichtung 1 zuverlässig ist oder nicht.

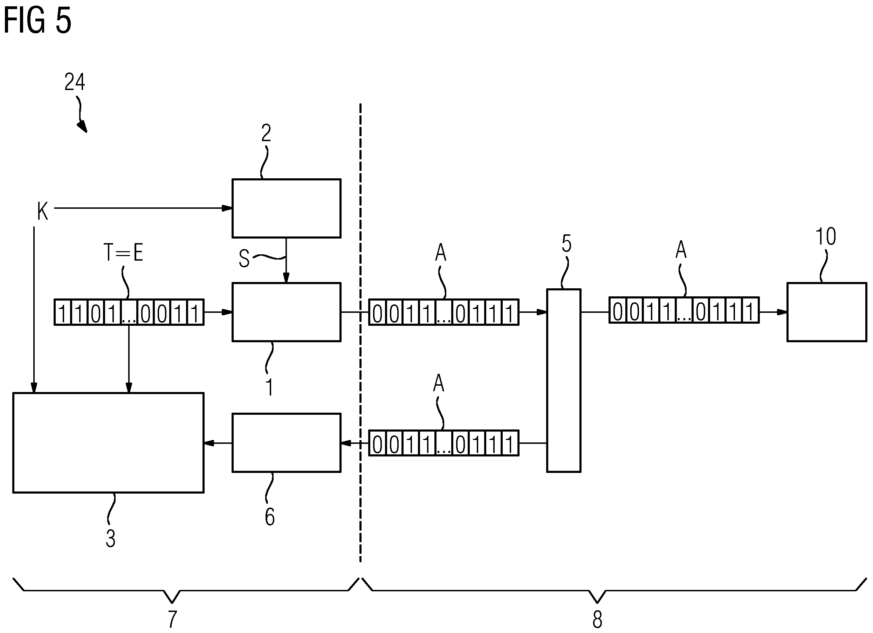

Die Fig. 5 zeigt ein System 24 zum Prüfen der Funktion der Verschlüsselungseinrichtung 1 gemäß der dritten Ausführungsform. Das System 24 ist geeignet, das in der Fig. 3 dargestellte Verfahren durchzuführen.

In dem System 24 befindet sich, zusätzlich zu den bereits beschriebenen Komponenten, ein Datenspiegel 5 und eine Datendiode 6. Das System ist zudem in einen vertrauten Bereich 7, in dem die zu schützende Daten verschlüsselt werden, und einen nicht vertrauten Bereich 8, in den die verschlüsselte Daten ausgesendet werden, aufgeteilt.

Das System 24 ermöglicht eine permanente Überwachung der Eingangsdaten E. Die Eingangsdaten E können hierbei als Testdaten T betrachtet werden, weil sie in dem vertrauten Bereich 8 öffentlich sind, und insbesondere der Überprüfungseinrichtung 3 bekannt sind.

In dem System 24 dient der Datenspiegel 5 dazu, die zu Ausgangsdaten A verschlüsselte Eingangsdaten E zur Überprüfungseinrichtung 3 zurückzuspiegeln. Die Datendiode 6 wird eingesetzt, um einen Verlust der zurückgespiegelten Ausgangsdaten A zu verhindern.

Die Ausgangsdaten A müssen zudem nicht geschützt werden, weil sie bereits in dem nicht vertrauten Bereich 8 bekannt sind. Die Datendiode 6 stellt sicher, dass keine Information aus der Überprüfungseinrichtung 3 während des Überprüfungsprozesses aus dem vertrauten Bereich 7 in den nicht vertrauten Bereich 8 gelangt.

Mit dem System 24 gemäß der dritten Ausführungsform wird die Funktion der Verschlüsselungseinrichtung 1 nicht nur stichprobenweise, sondern permanent überwacht. Dadurch kann die Zuverlässigkeit der Verschlüsselungseinrichtung 1 permanent überprüft werden.

Obwohl die vorliegende Erfindung anhand von Ausführungsbeispielen beschrieben wurde, ist sie vielfältig modifizierbar. Die Ursprungsschlüsseldaten und die Schlüsseldaten können auch anders als beschrieben miteinander verknüpft sein, zum Beispiel mit periodisch wechselnden Schlüsseln. Die Testdaten T müssen nicht in den Eingangsdaten E verstreut vorliegen, sondern können auch als ein separater Testdatenblock durch die Verschlüsselungseinrichtung 1 verschlüsselt werden. Es ist auch möglich, die Testdaten T dynamisch zu bestimmen. Ferner kann die Sicherheitseinrichtung zum Erzeugen der Schlüsseldaten weitere Funktionen als die erste und zweite vorbestimmte Funktion einsetzen.

## Patentansprüche

1. Verfahren zum Prüfen einer Funktion einer Verschlüsselungseinrichtung (1), wobei die Verschlüsselungseinrichtung (1) eingerichtet ist, Eingangsdaten (E) in Abhängigkeit von Schlüsseldaten (S), die durch eine Sicherheitseinrichtung (2) aus ersten Ursprungsschlüsseldaten (S₁) und/oder aus zweiten Ursprungsschlüsseldaten (S₂), die über eine erste vorbestimmte Funktion (K₁) mit den ersten Ursprungsschlüsseldaten (S1) verknüpft sind, unter Verwendung einer zweiten vorbestimmten Funktion (K₂) erzeugt wurden, zur Ausgabe von Ausgabedaten (A) anhand einer kryptographischen Verschlüsselungsfunktion (VF) zu verschlüsseln; wobei das Verfahren umfasst:
Verschlüsseln (P1) von Testdaten (T) als ursprüngliche Testdaten als Eingangsdaten (E) für die Verschlüsselungseinrichtung (1) mit zu verifizierenden Schlüsseldaten (S') zum Erzeugen von verschlüsselten Testdaten (VT);
Ermitteln (P2) der zu verifizierenden Schlüsseldaten (S'), mit Hilfe derer die verschlüsselten Testdaten (VT) verschlüsselt wurden, unter Verwendung der ursprünglichen Testdaten (T) und der kryptographischen Verschlüsselungsfunktion (VF) ;
Ermitteln (P3) von zu verifizierenden ersten und/oder zweiten Ursprungsschlüsseldaten (S₁', S₂') für die ermittelten zu verifizierenden Schlüsseldaten (S`) unter Verwendung der ermittelten zu verifizierenden Schlüsseldaten (S') und der zweiten vorbestimmten Funktion (K₂);
Bereitstellen (P4) der zu verifizierenden zweiten Ursprungsschlüsseldaten (S₂') oder der zweiten Ursprungsschlüsseldaten (S₂) als Vergleichsschlüsseldaten (V);
Anwenden (P5) der ersten vorbestimmten Funktion (K₁) auf die ersten zu verifizierenden Ursprungsschlüsseldaten (S₁`) zum Erzeugen von Überprüfungsschlüsseldaten (U);
Vergleichen (P6) der Überprüfungsschlüsseldaten (U) mit den Vergleichsschlüsseldaten (V); und
falls die Überprüfungsschlüsseldaten (U) mit den Vergleichsschlüsseldaten (V) übereinstimmen, Bestimmen (P7), dass die zu verifizierenden Schlüsseldaten (S'), mit denen die verschlüsselten Testdaten (VT) verschlüsselt wurden, mit der Sicherheitseinrichtung (2) erzeugt wurden.

2. Verfahren nach Anspruch 1, wobei die Schlüsseldaten (S), die ersten Ursprungsschlüsseldaten (S₁), die zweiten Ursprungsschlüsseldaten (S₂), die zu verifizierenden Schlüsseldaten (S'), die zu verifizierenden ersten Ursprungsschlüsseldaten (S₁'), die zu verifizierenden zweiten Ursprungsschlüsseldaten (S₂'), die Überprüfungsschlüsseldaten (U) und/oder die Vergleichsschlüsseldaten (V) ein Schlüsselstrom sind.

3. Verfahren nach Anspruch 1 oder 2, welches ferner ein dynamisches Bestimmen der Testdaten (T) umfasst.

4. Verfahren nach einem der Ansprüche 1 bis 3, wobei die Testdaten (T) verstreut in unbekannten zu schützenden Daten vorliegen.

5. Verfahren nach einem der Ansprüche 1 bis 4, wobei die kryptographische Verschlüsselungsfunktion (VF) eine XOR-Funktion ist.

6. Verfahren nach einem der Ansprüche 1 bis 5, wobei die erste vorbestimmte Funktion (K₁) eine Schlüsselableitfunktion und/oder ein asymmetrisches Signaturverfahren ist.

7. Verfahren nach einem der Ansprüche 1 bis 6, ferner umfassend:
Erzeugen der ersten vorbestimmten Funktion (K₁) in der Sicherheitseinrichtung (2);
Erzeugen einer neuen ersten vorbestimmten Funktion (K₁*) in der Sicherheitseinrichtung (2) nach Ablauf einer vorbestimmten Zeit seit dem Erzeugen der ersten vorbestimmten Funktion (K₁); und
Ersetzten der ersten vorbestimmten Funktion (K₁) durch die neue erste vorbestimmte Funktion (K₁*).

8. Verfahren nach einem der Ansprüche 1 bis 7, wobei die zweite vorbestimmte Funktion (K₂) eine Konkatenationsfunktion ist.

9. Verfahren nach einem der Ansprüche 1 bis 8, ferner umfassend:
Schützen der Testdaten (T) unter Verwendung eines Authentisierungsverfahren; und
Überprüfen der korrekten Ausführung des Authentisierungsverfahrens unter Verwendung von den ursprünglichen Testdaten (T) und der ermittelten zu verifizierenden Schlüsseldaten (S').

10. System (4) zum Prüfen einer Funktion einer Verschlüsselungseinrichtung (1) unter Verwendung einer Überprüfungseinrichtung (3), wobei die Verschlüsselungseinrichtung (1) eingerichtet ist, Eingangsdaten (E) in Abhängigkeit von Schlüsseldaten (S), die durch eine Sicherheitseinrichtung (2) erzeugt wurden, zur Ausgabe von Ausgabedaten (A) anhand einer kryptographischen Verschlüsselungsfunktion (VF) zu verschlüsseln; wobei das System (4) umfasst:
die Sicherheitseinrichtung (2) mit einer Erzeugungseinrichtung (21) zum Erzeugen der Schlüsseldaten (S) aus ersten Ursprungsschlüsseldaten (S₁) und/oder aus zweiten Ursprungsschlüsseldaten (S₂), die über eine erste vorbestimmte Funktion (K₁) mit den ersten Ursprungsschlüsseldaten (S1) verknüpft sind, unter Verwendung einer zweiten vorbestimmten Funktion (K₂) ; und
die Überprüfungseinrichtung (3), welche umfasst:
eine Empfangseinrichtung (31) zum Empfangen von verschlüsselten Testdaten (VT), die aus ursprünglichen Testdaten (T) als Eingangsdaten (E) mit zu verifizierenden Schlüsseldaten (S')durch die Verschlüsselungseinrichtung (1) verschlüsselt wurden;
eine Ermittlungseinrichtung (32) zum Ermitteln der zu verifizierenden Schlüsseldaten (S¹), mit Hilfe derer die verschlüsselten Testdaten (VT) verschlüsselt wurden, unter Verwendung der ursprünglichen Testdaten (T) und der kryptographischen Verschlüsselungsfunktion (VF), und zum Ermitteln von zu verifizierenden ersten und/oder zweiten Ursprungsschlüsseldaten (S₁', S₂') für die ermittelten zu verifizierenden Schlüsseldaten (S') unter Verwendung der ermittelten zu verifizierenden Schlüsseldaten (S`) und der zweiten vorbestimmten Funktion (K₂);
eine Bereitstelleinrichtung (33) zum Bereitstellen der zu verifizierenden zweiten Ursprungsschlüsseldaten (S₂') oder der zweiten Ursprungsschlüsseldaten (S₂) als Vergleichsschlüsseldaten (V);
eine Berechnungseinrichtung (34) zum Anwenden der ersten vorbestimmten Funktion (K₁) auf die ersten zu verifizierenden Ursprungsschlüsseldaten (S₁`) zum Erzeugen von Überprüfungsschlüsseldaten (U);
eine Vergleichseinrichtung (35) zum Vergleichen der Überprüfungsschlüsseldaten (U) mit den Vergleichsschlüsseldaten (V); und
eine Bestimmungseinrichtung (37) zum Bestimmen, dass die zu verifizierenden Schlüsseldaten (S'), mit denen die verschlüsselten Testdaten (VT) verschlüsselt wurden, mit der Sicherheitseinrichtung (2) erzeugt wurden, falls die Überprüfungsschlüsseldaten (U) mit den Vergleichsschlüsseldaten (V) übereinstimmen.

11. System nach Anspruch 10, welches eingerichtet ist, das Verfahren nach einem der Ansprüche 1 bis 9 durchzuführen.
